Europäisches Patentamt

European Patent Office

Office européen des brevets

(11) Publication number: **0 119 748**
**B1**

(12) **EUROPEAN PATENT SPECIFICATION**

(45) Date of publication of patent specification: **29.04.87**

(51) Int. Cl.⁴: **B 65 D 19/38, F 16 L 17/00**

(21) Application number: **84301014.1**

(22) Date of filing: **16.02.84**

(54) Inflatable tube seals and containers using such seals.

(30) Priority: **16.03.83 GB 8307244**
**22.06.83 GB 8316979**

(43) Date of publication of application:
**26.09.84 Bulletin 84/39**

(45) Publication of the grant of the patent:
**29.04.87 Bulletin 87/18**

(84) Designated Contracting States:
**BE DE FR IT SE**

(56) References cited:
**EP-A-0 090 616**
**FR-A- 902 062**
**FR-A-2 352 726**
**GB-A-1 286 544**
**GB-A-1 439 051**
**GB-A-1 483 945**
**GB-A-1 511 695**
**GB-A-2 038 776**
**GB-A-2 048 822**

(73) Proprietor: **AIRFLEX CONTAINERS LIMITED**
**Electra House Brunswick Road Cobbs Wood**
**Industrial Estate**
**Ashford Kent (GB)**

(72) Inventor: **Hickey, Christopher Daniel Dowling**
**Jarrets Farm Brantridge Lane Balcombe**
**Haywards Heath West Sussex RH17 6JR (GB)**

(74) Representative: **Bayliss, Geoffrey Cyril et al**
**BOULT, WADE & TENNANT 27 Furnival Street**
**London EC4A 1PQ (GB)**

EP 0 119 748 B1

Courier Press, Leamington Spa, England.

## Description

This invention relates to inflatable tube seals and to containers using such seals.

Containers for the storage and/or for transport of goods are known in which a flexible impermeable cover is sealed to a base by an inflatable tube seal which fits in a rigid channel. The inflatable tube may be permanently attached to a part of the cover or may be a separate tube serving, when inflated, to press the periphery of the cover tightly against the channel or against an impermeable bottom sheet. After sealing in this way, the region inside the container can be evacuated or partially evacuated so that the cover is pulled down over goods on the base, thereby to conform closely with the shape of the contents and effectively to minimise the enclosed storage volume. The evacuation of the container furthermore reduces the possibility of deterioration or atmospheric corrosion of goods in the container and permits of long-term storage. Many forms of such container are known; see for example U.K. Patent specifications Nos. 1286544, 1439051, 1483945, 1511695, 153002, 2038776 and 204882 and French Patent Specification No. 2352726.

Such containers are typically used for military purposes and can be subjected to severe wear and rough handling. It has been found that, in some circumstances an inflatable tube bursts or develops a leak. If the tube is attached to or forms part of the covering envelope of the container, then either a new tube has to be grafted onto the cover or the complete cover replaced. The present invention is directed to a method and form of construction enabling the container to be retained in use despite such a burst seal.

According to one aspect of the present invention a method of repairing a burst or leaky sealing tube in a container having an inflatable sealing tube adapted to fit within a rigid channel to seal a cover to a base comprises the steps of inserting into the channel in the region of the burst or leak a further length of tube sealed at both ends and inflating this further length of tube to compress the sealing tube tightly towards a wall of said channel. This further length of tube need only be a short length extending for a slightly longer distance than the burst portion of the sealing tube. It may be inflated to a relatively high pressure, compared with the pressures used in the sealing tube, in order to ensure that the sealing tube is compressed against the walls of said channel even when the remaining part of the sealing tube is subsequently inflated. It is preferred therefore that this further length of tube is less distendable, e.g. of relatively inextensible material, compared with the sealing tube. This further length of tube can thus be inflated with a much higher pressure than the sealing tube with limited distension. The required limited extensibility can readily be obtained by appropriate choice of material and/or of dimensions, e.g. wall thickness.

In a preferred construction, said further length of tube has, at spaced points along its length, peripherally extending upstanding elements to provide localised pressure for compressing the sealing tube tightly towards a wall of said channel. The peripherally extending upstanding elements might be integral with the further tube but most conveniently each is a separate element, for example an O-ring of a resilient material, which is put around said further tube. The use of separate elements in this way is convenient. Two such elements may be put in appropriate positions so as to apply compression to the sealing tube just beyond the ends of the burst section. As an added precaution, it is generally preferable to provide further such elements and typically four O-rings might be employed spaced apart to apply localised pressure to the sealing tube at four points along its length. By using the said O-rings, the positions of these elements may be adjusted as required to enable pressure to be applied to the sealing tube at two points beyond each end of the burst.

With this technique, if the sealing tube is burst, the further tube may be inserted at the appropriate place and inflated to compress the sealing tube against the channel wall and thereby seal off the burst portion of the sealing tube. The remaining part of the sealing tube may then be inflated in the usual way to effect sealing of the container over the major part of the periphery of the container. The further tube effects the sealing over the remainder of the periphery extending across the burst portion of the sealing tube.

Preferably said further tube comprises an outer tube of relatively inextensible material together with an inner inflatable tube of more extensible material. This arrangement permits of the inner tube being sealed and inflated but being arranged within an outer tube which need not be airtight. The outer tube serves the function of restraining the inner tube and thereby confining it to be substantially within the channel such that pressure can be exerted, on inflation of the inner tube, through the outer tube and peripherally extending elements onto the sealing tube within the channel. Typically part of the periphery of the outer tube, normally only a minor part, protrudes out of the channel and the remaining part of the outer tube lies within the channel. A one-way air inlet valve may be provided for inflating the inner tube.

In effecting a repair of a burst sealing tube, it is preferable to put a mastic or paste or other soft material in the sealing tube near the edges of the burst, more specifically in the regions where the pressure is applied by said projecting peripheral element onto the sealing tube. Such a mastic or other packing material within the sealing tube improves the seal against leakage effected by the pressure applied to the sealing tube and hence helps to ensure against loss of pressure when the sealing tube is re-inflated in use.

It may in some cases be convenient to utilise flexible metal strips between the peripheral projecting elements and the surface of the said further tube to help ensure that the forces developed by the internal pressure on inflating said further tube (or an inner tube within said further tube) are applied via the O-ring to effect compression of the sealing tube without the further tube distorting around the projecting elements.

It would alternatively or additionally be possible to constrain the further length of tube and thereby limit distension by providing a cover or shield, e.g. a metal cover, for the short length of tube, this cover fitting around a major part of the periphery of the short length of tube to prevent that tube expanding out of the channel and furthermore to distribute the pressure over the surface of the compressed sealing tube. Such a metal shield or cover may conveniently have raised ribs or the like to give localised pressure against the sealing tube in order to compress the latter tightly against the channel.

It will be understood that, in referring to the sealing tube being compressed against the channel, if the sealing tube is separate from the envelope, the periphery of the envelope may lie between the sealing tube and the channel. Similarly if there is a flexible impermeable sheet forming a bottom of the container and having a periphery in the channel, this will also be compressed against the channel wall. The short length of inflatable tube thus serves not only to compress the main sealing tube to prevent leakage therefrom but also serves to effect the required seal between the envelope and the channel and/or any bottom sheet.

A one-way air inlet valve may be provided for inflating said further length of tube. A burst or leak is usually only of very short length and hence only a short length of tube is required for repairing the burst in the way described above. Such a short length may readily be inflated with a portable pumping device to adequate pressure to effect to tight seal. If a cover or shield is provided as described above, this may have an aperture through which the air inlet valve extends.

The invention furthermore includes within its scope a container having an envelope of impermeable material forming a cover which is sealed to an impermeable base or bottom sheet by means of an inflatable tube within a rigid channel and wherein, for effecting repair of a length of the inflatable sealing tube containing a burst or leak, there is provided a further length of inflatable tube, closed at both ends and adapted for insertion into the channel over the region where the sealing tube is burst or damaged, said further length of tube having valve means to permit of its inflation to effect compression of the sealing tube. As indicated above, preferably projecting elements, for example O-rings, are provided around the inserted assembly to give peripheral regions of tight compression against the inflatable tube.

According to a further aspect of the invention, in a container having an envelope of impermeable material forming a cover which is sealed to an impermeable base or bottom sheet by means of an inflatable tube within a rigid channel, for effecting repair of a length of the inflatable sealing tube containing a burst or leak, there is provided a further length of inflatable tubing having peripherally-extending upstanding projecting elements at spaced points along its length to provide localised pressure when said further length of tube is inserted into the channel over the region where the sealing tube is burst or damaged, said further length of tube having valve means to permit of its inflation to effect compression of the sealing tube. The aforesaid projecting elements are conveniently resilient O-rings around said length of inflatable tubing which can be adjustable in position along said inflatable tubing.

The further length of inflatable tube is preferably less distendable than the sealing tube, e.g. of relatively inextensible material. However a cover or shield may be provided for fitting into said channel over said short length of tube so that part of the sealing tube is enclosed within the channel and the cover or shield.

Preferably the cover or shield is of resilient material and shaped resiliently to engage within and thereby be retained within said channel. For example the channel may have lips or inwardly directed flanges or peripheral portions under which the shield or cover engages. Preferably the shield or cover has ribs or projections for effecting localised compression of the sealing tube.

In the following description of a number of embodiments of the invention, reference will be made to the accompanying drawings in which:—

Figures 1 and 2 are sectional views showing respectively two known types of seals with parts of the structures being sealed;

Figure 3 is a perspective view of a repair tube member for repairing a seal in a container of Figure 1 or Figure 2;

Figure 4 is a section along the line 4—4 of Figure 3;

Figures 5 and 6 are sectional views illustrating the repair member of Figures 3 and 4 in use in respectively the structures of Figure 1 and Figure 2;

Figure 7 is a section through a seal of the type illustrated in Figure 1 illustrating another construction of means for sealing the container in the event of a burst in a sealing tube;

Figure 8 is a sectional view similar to Figure 7 but illustrating another form of construction;

Figure 9 is a perspective view illustrating a metal shield used in the construction of Figure 8;

Figure 10 is a perspective view of a portion of an envelope and sealing tube 11 illustrating a burst in the sealing tube;

Figure 11 is a sectional view through part of the envelope and burst tube of Figure 10;

Figure 12 is a perspective view of an inflatable repair tube for use in repairing a container having a burst inflatable sealing tube;

Figure 13 is a transverse cross-section through the repair tube of Figure 12;

Figure 14 is a diagram similar to Figure 10 but showing how the region of the burst inflatable tube is cut away before making a repair;

Figure 15 is a plan view of part of the envelope and inflatable tube of Figure 14 showing sealing compound inserted into the inflatable tube;

Figure 16 is a cross-section through part of a container showing the envelope, inflatable tube, base membrane and repair tube inserted into a rigid channel; and

Figure 17 illustrates the assembly of Figure 16 after inflation of the repair tube.

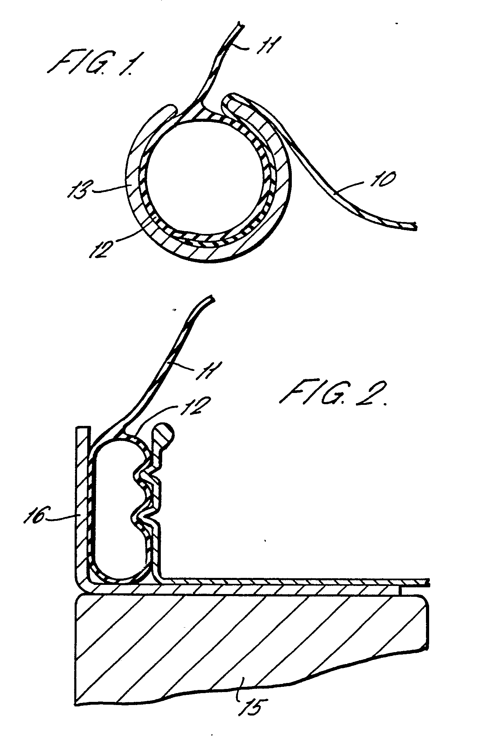

Referring to Figure 1 there is shown diagrammatically part of a known type of container comprising an impermeable flexible base 10 and a flexible envelope or cover 11 also of impermeable material, e.g. butyl rubber. This container might typically be used as a flexible shelter, e.g. for a vehicle. Suitable rigid elements may be put over the base 10 to form a flooring or support for the vehicle or other goods to be stored. Extending around the periphery of the cover 11 is an inflatable sealing tube 12 which can be inserted in a channel 13 or groove member forming a peripheral rigid base structure to seal the cover 11 to the base sheet 10. The inflatable sealing tube 12 may be integral with or attached to the envelope 11 or may be separate therefrom.

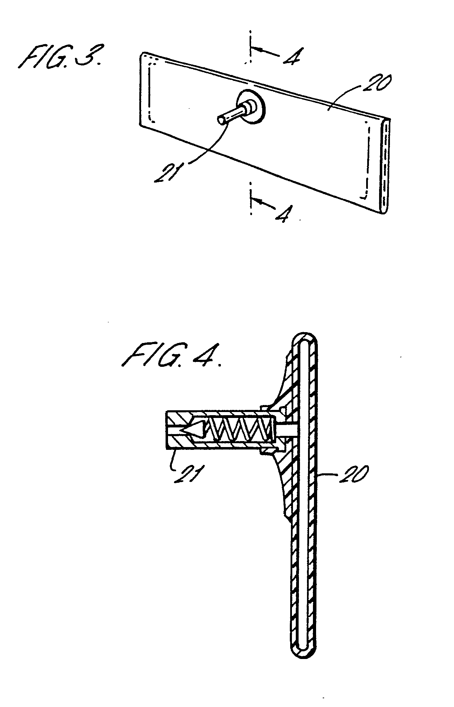

Figure 2 illustrates part of another known type of container comprising an impermeable metal base 15, typically formed as a pallet, and a flexible envelope or cover 11 of impermeable material, e.g. butyl rubber. As in the construction of Figure 1, the cover 11 has, extending around its periphery, an inflatable sealing tube 12 for insertion in a channel or groove 16 in the base to seal the cover 11 to the base 15. The tube 12 may be integral with or attached to the envelope 11 or may be separate therefrom. In the latter case it may be secured to the channel or groove 16 or retained in a holder therein.

In use, the cover 11 of Figure 1 or Figure 2 is placed over goods on the base and is then sealed in the channel 13 or 16 by inflating the inflatable tube 12. The envelope is then evacuated by means of a vacuum pump so that it is sucked down onto the goods on the base.

The present invention is concerned more particularly with the sealing tube and the problem of repairing faults therein if the tube is damaged, e.g. by puncture or, in the worst cases, by partial bursting, due to accident or mis-use of the system or if the tube otherwise develops a leak.

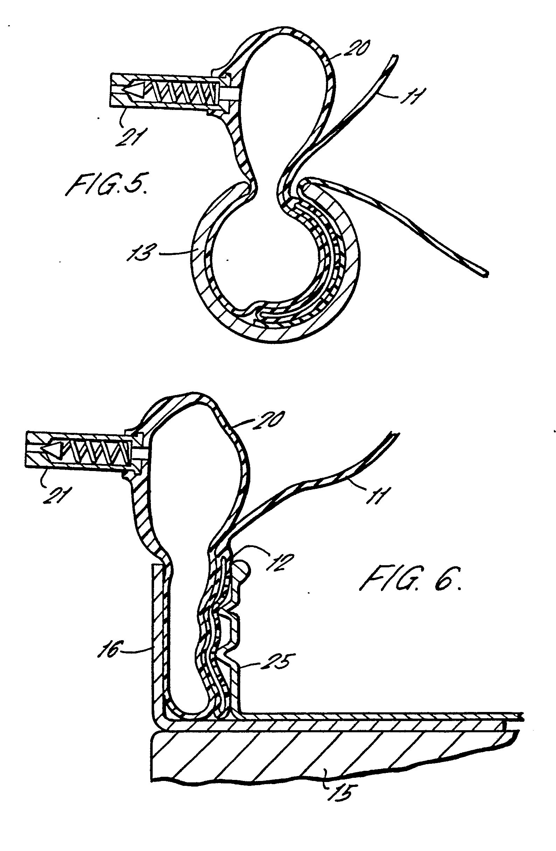

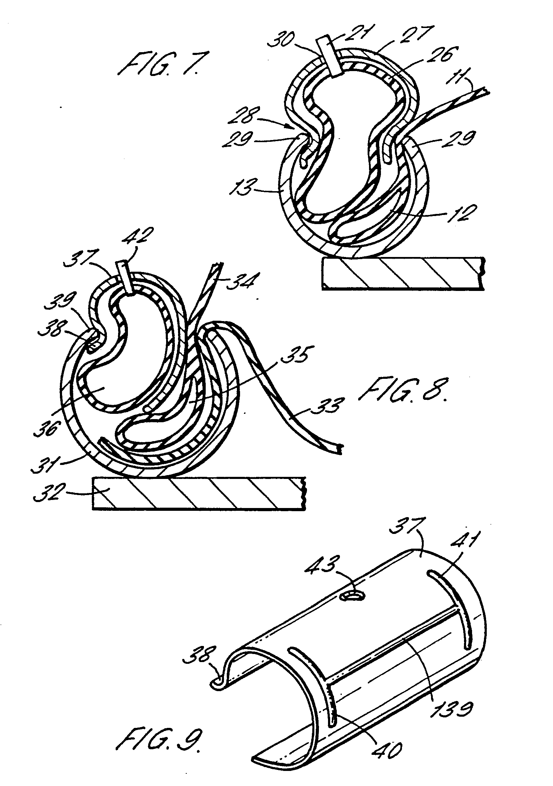

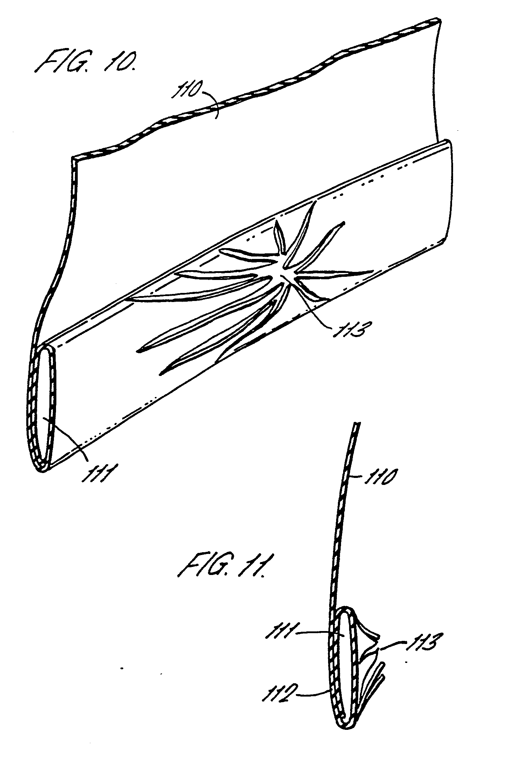

Figures 3 and 4 illustrate a member, comprising a short length of inflatable tube 20 for repairing a damaged or burst sealing tube. Figure 5 illustrates this repair tube 20 in use in a seal of the type illustrated in Figure 1. Seen in section in Figure 5 is part of the sealing tube 12 which, in this embodiment, is permanently attached to part of the cover 11.

For effecting sealing if part of the sealing tube 12 is burst, the short length of further inflatable tube 20, which is closed at both ends, is inserted into the channel 13 adjacent the sealing tube 12.

In this embodiment, the tube 20 is a flattened, pouch-like inflatable member having closed and sealed ends. A non-return valve 21 is provided for inflating the tube 20. The tube 20 is of greater height than the channel 13 in which it is to be used, so that the valve 21 extends outwardly above the top of the channel wall. The tube 20 is constructed of flexible and impermeable material (e.g. polymeric material) which is either wholly or partially reinforced with inextensible fabric to constrain distension on inflation.

The tube 20 can be inflated through the valve 21 and would be inflated to a higher pressure than is used for inflating the sealing tube 12. The inflation of the tube 20 compresses the sealing tube 12 tightly against the wall of the channel over a short length of the channel. This length extends over the burst section of the tube 12 (shown by broken lines in Figure 5) and thus enables the remainder of the sealing tube 12 to be inflated in the normal way to retain the cover 11 sealed within the channel 12.

When thus positioned and inflated the tube 20 will take up "figure of eight" configuration in section such that the damaged portion of the sealing tube 12 will be compressed into firm contact with the base membrane 10 and the adjacent wall of the channel 13. It will also render closed and sealed that portion of length of the sealing tube 12 which is in contact with tube 20. Because the tube 20 is inflated at a pressure higher than that to be applied in the sealing tube 12, the sealing tube may subsequently be inflated throughout the remaining periphery of the container, thereby to effect closure of the pneumatic seal as a whole.

It will be appreciated that, if the inflatable tube member of Figures 3 and 4 is inflated without applied physical constraint, it will, because of the limited extensibility of fabric reinforced composite material, take up a cylindrical form of finite diameter. When constrained, as shown in Figure 5, it takes up a shape in accordance with the section periphery provided with part only on the tube above the top of the channel 13. The limiting safe pressure will be a function of the tensile strength of the composite material forming the tube 20.

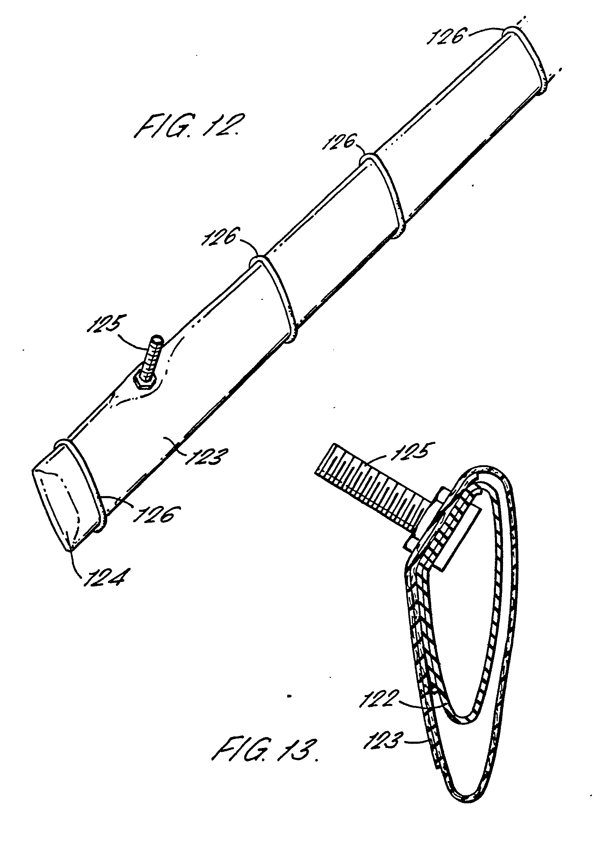

Figure 6 illustrates the use of the inflatable tube member of Figures 3 and 4 in a seal of the type shown in Figure 2 for a rigidly constructed container or for pallets. In this case there is no base sheet 10 and the damaged portion of the sealing tube 12 is forced into contact with a rigid wall 25 of the airtight base structure.

In each of the embodiments of Figures 5 and 6, although the member 20 is upstanding above the top of the groove or channel, distension is limited by the inextensible nature of the material employed.

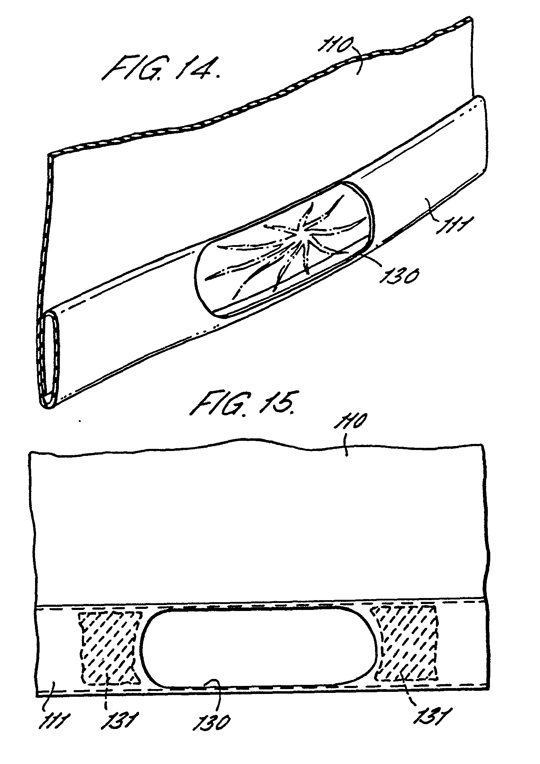

Figure 7 illustrates another embodiment of the invention in which a shield or cover is provided to constrain expansion of the repair tube 20. This arrangement permits of the use of repair tubes of extensible material as well as tubes of the type described above with reference to Figures 3 to 6. In Figure 7 there is shown a channel 13 of the form described with reference Figure 1 together with a sealing tube 12 which, in this embodiment, is permanently attached to part of the cover 11. The channel 13 may be secured to or an integral part of an impermeable base or may be separate therefrom. In the latter case, an impermeable sheet may be provided over the base with its periphery extending into the channel 12 to be sealed thereto by inflation of the inflatable tube.

For effecting sealing if part of the tube 12 is burst, there is provided a short length of further inflatable tube 26 which is closed at both ends and which is inserted into the channel 13 adjacent the tube 12. Over this tube 26 there is put a metal cover or shield 27 made of springy material and shaped, in this embodiment, to have a neck portion 28 shaped so that the cover can be sprung into position with inturned portions 29 at the top edge of the channel 12 holding the cover in position at its neck. A valve 21 for inflating the tube 26 extends through an aperture 30 in this cover 27.

The tube can be inflated through this valve 21 and would normally be inflated to a slightly higher pressure than is used for inflating the sealing tube 12. The inflation of the tube 26 compresses the sealing tube 12 tightly against the wall of the channel over a short length of the channel. This length extends over the burst section of the tube 12 and this enables the remainder of the sealing tube 12 to be inflated in the normal way to retain the cover 11 sealed within the channel 13.

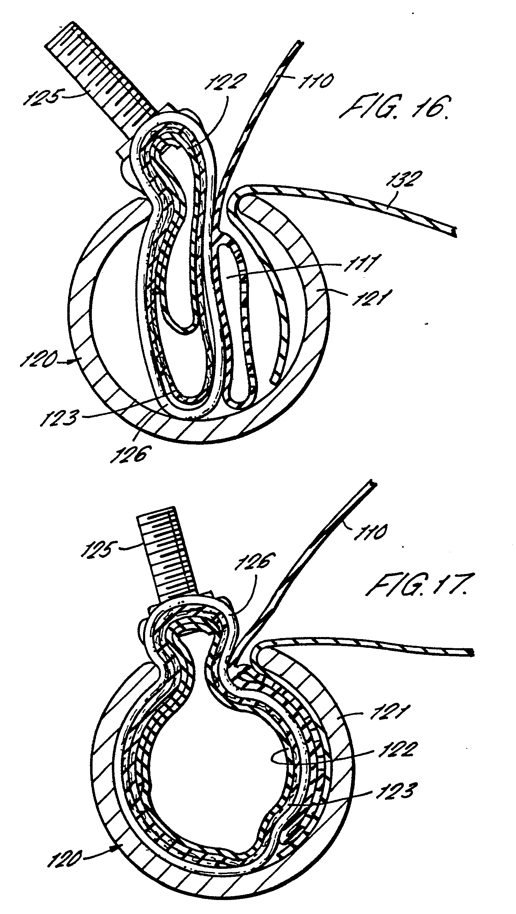

Figures 8 and 9 illustrate an alternative form of construction. Referring to these figures, the channel is shown at 31 on a rigid support 32 with, in this embodiment, a sheet of impermeable material 33 forming an impermeable layer over the bottom of the container and with its periphery extending into the channel 31. A cover 34 for the container has an inflatable seal 35 located also in the channel 31 and which normally can be inflated to seal the cover 34 and bottom sheet 33 together. In a region where this sealing tube 35 is burst, there is inserted in the channel a short length of inflatable tube 36 closed at both ends and retained by a cover 37 which, in this particular example, has along one longitudinal edge a lip 38 fitting under a lip 39 of the channel. The cover 37 extends around the inside of the channel member to bear against the inflatable tube 36 and, in this region, has a longitudinal rib 139 and part circumferential ribs 40, 41 to form pressure regions giving localised pressure on the inflatable sealing tube to press the walls of that tube together and also to press that tube against the bottom sheet 33 and wall of the channel 31. The tube 36 has a valve 42 extending through a hole 43 in the cover 37 for enabling the tube 36 to be inflated.

It will be seen that the arrangement of Figures 8 and 9, like that of Figure 7, enables a repair to be effected and the container to be sealed even if the main sealing tube should burst or develop a leak and permits the use of extensible as well as substantially inextensible materials for the repair tube.

Figure 10 to 17 illustrate a modification of the technique and apparatus described above.

Bursting of a tube, as shown at 113 in Figures 10 and 11, occurs usually on the inside surface of the sealing tube since the valve for inflating the sealing tube has to extend outwardly from the container and is preferably supported in the thicker wall portion of the inflatable tube formed where the multiple layers are welded together. If the sealing tube is properly inserted in the channel 120 (Figures 16 and 17) the tube is firmly supported and can be subjected to internal pressure without any risk of excessive distention and consequent bursting. Rupture of the tube therefore is commonly due to incorrect insertion of the sealing tube within the channel. Since the envelope extends continuously into the channel and the burst is on the inside, the present invention effects the required sealing by compression of the envelope and burst portion of the tube tightly against the inner wall 121 of channel 120. This is effected by the use of the repair tube illustrated in Figures 12 and 13. This repair tube comprises an inner inflatable tube 122 formed of impermeable extensible material such as butyl rubber located within an outer constraint tube 123 which is constructed from a material which is substantially non-extensible. This outer tube 123 must however be of flexible material and conveniently is formed of fabric reinforced butyl rubber sheet. It is not essential that the outer tube should be impermeable and it need not necessarily be sealed at its ends in an airtight manner although preferably the ends are sealed as shown at 124 in Figure 12. The inner tube 122 is provided with a Schrader-type inflation valve 125, that is a non-return valve which may be similar to that used for pneumatic tyres on vehicles, this valve being supported by the outer tube 123. The inner tube 122 is sealed at both ends and extends for substantially the whole length of the outer tube 123.

A number of resilient O-rings 126, preferably of circular cross-section, are slid onto the repair tube assembly as shown in Figure 12. These O-rings are readily movable along the repair tube and are, in use, positioned in manner to be described later.

Referring to Figures 14 and 15, to effect a repair, the burst area of the inflatable tube 111 is cut away as shown in Figure 14 so as to leave a clean hole 130 through which access may be obtained to the immediately adjacent regions of the inside of the inflatable tube. A viscous paste-type sealing compound is inserted into the inflatable tube in these regions as shown at 131 in Figure 15. This sealing compound might for example be uncured butyl rubber mix. Many other types of material may be used, the basic requirements being that the material should be compatible with the material of the inflatable tube and should remain as a pasty mix to effect an airtight seal when the sealing tube is compressed.

The repair tube is then inserted into the channel adjacent the damaged area of the inflatable tube 111, as shown in Figure 16.

Figure 16 shows the channel 120 with part of an impermeable membrane 132 forming the base of the container, part of the impermeable sheet 110 forming the cover for the container, this sheet being formed with an inflatable tube 111 which has been damaged as described above. It will be seen that the repair tube has a major portion lying within the channel 120 but the valve 125 and the part of the repair tube periphery to which the valve is attached extends out of the open top of the channel.

The repair tube is inflated via the aforementioned inflation valve 125 to a pressure which is substantially higher than the pressure normally used for inflation of the inflatable tube 111. Typically the repair tube might be inflated to a pressure of between 40 and 75 psi (between 276 kPa. and 517 kPa.). This pressure causes the inner inflatable tube 122 to distend against the inner surface of the outer constraint tube 123. The latter prevents further distention of the inner inflatable tube and the internal pressure is transmitted via the O-rings 126 to press the inflatable sealing tube 111 tightly against the wall of the channel. The pressure is applied particularly via the O-rings which form peripheral projecting portions around the repair tube. Two of these O-rings are positioned, one on each side of the burst, to apply pressure in the region where the aforementioned paste-type sealing compound has been inserted in the inflatable tube 111. This ensures tight compression and sealing of the inflatable tube in this region. The remaining two O-rings are spaced further apart beyond the region of the burst in the sealing tube and provide secondary protection for further ensuring tight sealing of the inflatable tube. This sealing off of the burst region enables the sealing tube 111 to be inflated in the normal manner. The pressure employed is less than that in the repair tube, typically 10 to 15 psi (69 to 103 kPa.) so as to ensure that the repair tube will compress the inflatable tube even when the latter is pressurised.

The repair tube ensures tight sealing of the cover sheet 110 to the base sheet 132 over the region of the burst in the inflatable tube 111. Around the remainder of the periphery of the container, the inflation of the tube 111 ensures sealing in the normal way.

In some cases it may be preferred to provide flexible metal strips between the O-rings and the outer surface of the reinforced tube so as to prevent the latter from deforming around the O-rings and thereby reducing the effective clamping pressure; the metal strips ensure that the pressure is applied to the O-rings to give localised firm compression of the inflatable tube 111.

## Claims

1. A method of repairing a burst or leaky sealing tube (12, 35) in a container having an inflatable sealing tube adapted to fit within a rigid channel (29, 31) to seal a cover (11, 33) to a base; characterised by the steps of inserting into the channel in the region of the burst (113) or leak a further length of tube (20) sealed at both ends and inflating this further length of tube (20) to compress the sealing tube (12, 35) tightly towards a wall of said channel.

2. A method as claimed in claim 1 wherein said further length of tube (20) is inflated to a relatively high pressure, compared with the pressures used in the sealing tube (12, 35) in order to ensure that the sealing tube is compressed against the walls of said channel (29, 31) even when the remaining part of the sealing tube is subsequently inflated.

3. A method as claimed in either claim 1 or claim 2 wherein said further length of tube (20) is less distendable than the sealing tube (12, 35).

4. A method as claimed in claim 3 wherein said further length of tube (20) is formed of a relatively inextensible material compared with the material of the sealing tube (12, 35).

5. A method as claimed in any of the preceding claims wherein said further length of tube (20) is formed of flexible impermeable material which is fabric reinforced.

6. A method as claimed in either claim 1 or claim 2 wherein a cover or shield (27, 37) is provided for said further length of tube, this cover fitting around a major part of the periphery of the further length of tube to prevent that tube expanding out of the channel.

7. A method as claimed in any of the preceding claims wherein localised pressure is applied against the sealing tube by raised ribs (40, 41, 139) or the like on the cover or shield (37) in order to compress the sealing tube tightly against the channel.

8. A method as claimed in any of claims 1 to 6 wherein said further length of tube (122) has, at spaced points along its length, peripherally-extending upstanding elements (126) to provide localised pressure for compressing the sealing tube tightly towards a wall of said channel.

9. A method as claimed in claim 8 wherein each peripherally upstanding element (122) is a separate element which is put around said further length of tube.

10. A method as claimed in claim 9 wherein each upstanding element (126) is an O-ring of resilient material.

11. A method as claimed in any of claims 8 to 10 wherein two upstanding elements are put in appropriate positions so as to apply compression to the sealing tube just beyond the ends of the burst section.

12. A method as claimed in any of the preceding claims wherein said further length of tube comprises an outer tube (123) of relatively inextensible material together with an inner inflatable tube (122) of more extensible material.

13. A method as claimed in any of the preceding claims wherein a mastic or paste or other soft material is put in the sealing tube near the edges of the burst.

14. A method as claimed in claim 13 wherein the mastic or other soft material is put in regions where pressure is applied to said sealing tube by said projecting peripherally-extending elements.

15. A method as claimed in any of the preceding claims wherein flexible metal strips are positioned between the peripheral projecting elements and the surface of the said further length of tube.

16. A container having an envelope of impermeable material forming a cover (11) which is sealed to an impermeable base (32) or to an impermeable bottom sheet (33) by means of an inflatable sealing tube (12) within a rigid channel (13); characterised in that, for effecting repair of a length of the inflatable sealing tube (12) containing a burst (113) or leak a further length of inflatable tube (20, 26, 122) is provided, closed at both ends and adapted for insertion into the channel over the region where the sealing tube (12) is burst or damaged, said further length of tube having valve means (21, 125) to permit of its inflation to effect compression of the sealing tube.

17. A container as claimed in claim 16, characterised in that said further length of tube (20) is less distendable than the sealing tube (12).

18. A container as claimed in claim 16, characterised in that said further length of tube (20) is formed of a material which is relatively inextensible compared with the material of the sealing tube (12).

19. A container as claimed in any of claims 16 to 18, characterised in that said further length of tube (20) is formed of a material which is relatively inextensible compared with the material of the sealing tube (12).

20. A container as claimed in any of claims 16 to 19 charcterised in that a cover or shield (27) is arranged for fitting into said channel (13) over said short length of sealing tube (12) so that part of the further length of tube (26) is enclosed within the channel (13) and the cover or shield (27).

21. A container as claimed in claim 20, characterised in that the cover or shield (27) is of resilient material and is shaped (28) resiliently to engage within and thereby the retained within said channel.

22. A container as claimed in claim 21, characterised in that the channel has lips or inwaredly directed flanges or peripheral portions (29) under which the shield or cover (27) resiliently engages.

23. A container as claimed in any of claims 20 to 22, characterised in that the cover or shield (27) has an aperture through which protrudes a valve (21) for inflating said further length of tube (26).

24. A container as claimed in any of claims 20 to 23, characterised in that the shield or cover (37) has ribs or projections (40, 41, 139) for effecting localised compression of the sealing tube (12).

25. A container as claimed in claim 16, characterised in that said further length of inflatable tube (122) is formed of resilient material closed at both ends and contained within an outer tube (123) of non-extensible material, the further length of tube within the outer tube being inserted into the channel over the region where the sealing tube is burst or damaged wherein projecting elements (126) are provided around the inserted assembly to give peripheral regions of tight compression against the further length of inflatable tube (122).

26. A container as claimed in claim 16, characterised in that said further length of inflatable tube (122) having peripherally-extending upstanding projecting elements (126) at spaced points along its length to provide localised pressure when said further length of tube is inserted into the channel over the region where the sealing tube is burst or damaged.

27. A container as claimed in either claim 25 or claim 26, characterised in that said projecting elements are resilient O-rings (126) around said further length of inflatable tube (122).

**Patentansprüche**

1. Verfahren zum Reparieren eines geplatzten oder undichten Dichtungsschlauches (12, 35) in einem Behälter, der einen aufblasbaren Dichtungsschlauch hat, der derart beschaffen und ausgelegt ist, daß er in einen starren Kanal (29, 31) paßt, um einen Deckel (11, 33) mit einer Basis abzudichten, gekennzeichnet durch die Schritte, daß in den Kanal im Bereich der geplatzten Stelle (113) oder der undichten Stelle ein weiteres Längsstück des Schlauches (20) eingelegt wird, der an beiden Enden dicht verschlossen ist, und daß dieses weitere Schlauchlängsstück (20) aufgeblasen wird, um den Dichtungsschlauch (12, 35) eng anliegend gegen eine Wand des Kanals zusammenzudrücken.

2. Verfahren nach Anspruch 1, bei dem das weitere Schlauchlängsstück (20) auf einen relativ hohen Druck im Vergleich zu den im Dichtungsschlauch (12, 35) verwendeten Drücken aufgeblasen wird, um sicherzustellen, daß der Dichtungsschlauch gegen die Wände des Kanals (25, 31) selbst dann zusammengedrückt wird, wenn der restliche Teil des Dichtungsschlauches anschließend aufgeblasen wird.

3. Verfahren nach Anspruch 1 oder 2, bei dem das weitere Schlauchlängsstück (20) weniger dehnbar als der Dichtungsschlauch (12, 35) ist.

4. Verfahren nach Anspruch 3, bei dem das weitere Schlauchlängsstück (20) aus einem relativ undehnbaren Material im Vergleich zu dem Material des Dichtungsschlauches (12, 35) ausgebildet ist.

5. Verfahren nach einem der vorangehenden Ansprüche, bei dem das weitere Schlauchlängsstück (20) aus einem flexiblen, undurchlässigen Material ausgebildet ist, das gewebeverstärkt ist.

6. Verfahren nach Anspruch 1 oder Anspruch 2, bei dem ein Deckel oder eine Schutzabdeckung (27, 37) für das weitere Schlauchlängsstück vorgesehen ist, wobei dieser Deckel um einen Großteil des Umfangs des weiteren Schlauchlängsstückes vorgesehen ist, um zu verhindern, daß der Schlauch bei der Expansion aus dem Kanal austritt.

7. Verfahren nach einem der vorangehenden Ansprüche, bei dem örtlich Druck gegen den Dichtungsschlauch durch erhabene Rippen (40, 11, 139) oder dergleichen an dem Dekkel oder der Schutzabdeckung (37) aufgebracht wird, um den Dichtungsschlauch eng anliegend gegen den Kanal zusammenzudrücken.

8. Verfahren nach einem der Ansprüche 1 bis 6, bei dem das weitere Schlauchlängsstück (122) an längs seiner Länge im Abstand liegenden Stellen in Umfangsrichtung weisende stehende Elemente (126) hat, um einen örtlichen Druck zum Zusammendrücken des Dichtungsschlauches in enger Anlage gegen eine Wand des Kanals aufzubringen.

9. Verfahren nach Anspruch 8, bei dem jedes in Umfangsrichtung stehende Element (122) ein separates Element ist, das um das weitere Schlauchlängsstück gelegt wird.

10. Verfahren nach Anspruch 9, bei dem jedes stehende Element (126) ein O-ring aus federnd nachgiebigem Material ist.

11. Verfahren nach einem der Ansprüche 8 bis 10, bei dem zwei aufrecht stehende Elemente an geeigneten Stellen derart angeordnet sind, um ein Zusammendrücken des Dichtungsschlauches unmittelbar außerhalb den Enden des geplatzten Teiles zu bewirken.

12. Verfahren nach einem der vorangehenden Ansprüche, bei dem das weitere Schlauchlängsstück einen äusseren Schlauch (123) aus relativ undehnbarem Material zusammen mit einem inneren aufblasbaren Schlauch (122) aus einem dehnbareren Material aufweist.

13. Verfahren nach einem der vorangehenden Ansprüche, bei dem ein Mastix oder eine Paste oder ein anderes weiches Material in den Dichtschlauch in der Nähe der Ränder des zerplatzten Teiles eingebracht wird.

14. Verfahren nach Anspruch 13, bei dem der Mastix oder das andere weiche Material in den Bereichen eingebracht wird, an denen der Druck auf den Dichtungsschlauch durch die vorstehenden, in Umfangsrichtung verlaufenden Elemente aufgebracht wird.

15. Verfahren nach einem der vorangehenden Ansprüche, bei dem flexible Metallstreifen zwischen den in Umfangsrichtung vorspringenden Elementen und der Oberfläche des weiteren Schlauchlängsstückes angeordnet sind.

16. Behälter, der eine Umhüllung aus einem undurchlässigen Material hat, die einen Deckel (11) bildet, der dicht zu einer undurchlässigen Basis (32) oder zu einem undurchlässigen Bodenteil (33) mit Hilfe eines aufblasbaren Dichtungsschlauches (12) in einem starren Kanal (13) verschlossen ist, dadurch gekennzeichnet, daß zur Reparaturausführung eines Längsstückes des aufblasbaren Dichtungsschlauches (12), das eine zerplatzte Stelle (113) oder eine undichte Stelle aufweist, ein weiteres Längsstück des aufblasbaren Schlauches (20, 26, 122) vorgesehen wird, das an beiden Enden geschlossen ist und das derart beschaffen und ausgelegt ist, daß es in den Kanal an dem Bereich einlegbar ist, an dem der Dichtungsschlauch (12) geplatzt oder beschädigt ist, und daß das weitere Schlauchlängsstück eine Ventileinrichtung (21, 125) hat, um ein Aufblasen zu ermöglichen, so daß der Dichtungsschlauch zusammengedrückt wird.

17. Behälter nach Anspruch 16, dadurch gekennzeichnet, daß das weitere Schlauchlängsstück (20) weniger dehnbar als der Dichtungsschlauch (12) ist.

18. Behälter nach Anspruch 16, dadurch gekennzeichnet, daß das weitere Schlauchlängsstück (20) aus einem Material ausgebildet ist, das relativ im Vergleich zu dem Material des Dichtungsschlauches (12) undehnbar ist.

19. Behälter nach einem der Ansprüche 16 bis 18, dadurch gekennzeichnet, daß das weitere Schlauchlängsstück (20) aus einem Material ausgebildet ist, das im Vergleich zu dem Material des Dichtungsschlauches (12) relativ undehnbar ist.

20. Behälter nach einem der Ansprüche 16 bis 19, dadurch gekennzeichnet, daß ein Deckel oder eine Schutzabdeckung (27) angeordnet ist, die in den Kanal (13) über das kurze Längsstück des Dichtungsschlauches (12) paßt, so daß ein Teil des weiteren Schlauchlängsstückes (26) in dem Kanal (13) und dem Deckel oder der Schutzabdeckung (27) eingeschlossen ist.

21. Behälter nach Anspruch 20, dadurch gekennzeichnet, daß der Deckel oder die Schutzabdeckung (27) aus einem federnd nachgiebigen Materiabesteht und federnd derart geformt (28) ist, daß es in dem Kanal in Eingriff und daher in dem Kanal festgelegt ist.

22. Behälter nach Anspruch 21, dadurch gekennzeichnet, daß der Kanal Rippen oder nach innen weisende Flansche oder Umfangsteile (29) hat, unter denen die Schutzabdeckung oder der Deckel (27) federnd nachgiebig in Eingriff ist.

23. Behälter nach einem der Ansprüche 20 bis 22, dadurch gekennzeichnet, daß der Deckel oder die Schutzabdeckung (27) eine Öffnung hat, durch die eine Ventil (21) zum Aufblasen des weiteren Schlauchlängsstückes (26) vorsteht.

24. Behälter nach einem der Ansprüche 20 bis 23, dadurch gekennzeichnet, daß die Schutzabdeckung oder der Deckel (37) Rippen oder Vorsprünge (40, 41, 139), hat, um ein örtliches Zusammendrücken des Dichtungsschlauches (12) zu bewirken.

25. Behälter nach Anspruch 16, dadurch gekennzeichnet, daß das weitere aufblasbare Schlauchlängsstück (122) aus einem federnd nachgiebigen Material ausgebildet ist, an beiden Enden geschlossen ist und es sich in einem äußeren Schlauch (123) aus undehnbarem Material befindet, daß das weitere Schlauchlängsstück in dem äußeren Schlauch in dem Kanal an dem Bereich eingeführt wird, an dem der Dichtungsschlauch geplatzt oder beschädigt ist, und daß vorspringende Elemente (126) um die eingesetzte Anordnung vorgesehen sind, um Umfangsbereiche mit enger Druckanlage gegen das weitere aufblasbare Schlauchlängsstück (122) haben.

26. Behälter nach Anspruch 16, dadurch gekennzeichnet, daß das weitere aufblasbare Schlauchlängsstück (122) in Umfangsrichtung verlaufende, aufrecht stehende, vorspringende Elemente (126) an im Abstand liegenden Stellen längs seiner Längserstreckung hat, um örtlich Druck auszuüben, wenn das weitere Schlauchlängsstück in den Kanal an dem Bereich eingeführt ist, an dem der Dichtungsschlauch geplatzt oder beschädigt ist.

27. Behälter nach Anspruch 25 oder 26, dadurch gekennzeichnet, daß die vorspringenden Elemente federnd nachgiebige O-Ringe (126) um das weitere aufblasbare Schlauchlängsstück (122) sind.

**Revendications**

1. Procédé de réparation de tube d'étanchéité (12, 35) éclaté ou fuyant dans un conteneur comportant un tube d'étanchéité gonflable propre à s'emboîter dans un canal rigide (29, 31) pour fixer de façon étanche une bâche (11, 33) eur une embase, caractérisé par les opérations consistant à insérer dans le canal dans la région d'éclatement (113) ou de fuite un tronçon de tube supplémentaire (20) fermé aux deux extrémités et à gonfler ce tronçon de tube supplémentaire (20) pour comprimer hermétiquement le tube d'étanchéité(12, 35) vers une paroi dudit canal.

2. Procédé selon la revendication 1 dans lequel on gonfle ledit tronçon de tube supplémentaire sous une pression relativement élevée, par rapport aux pressions adoptées dans le tube d'étanchéité (12, 35), afin d'assurer que le tube d'étanchéité soit comprimé contre les parois dudit canal (28, 31) même lorsqu'on gonfle ultérieurement la partie restante du tube d'étanchéité.

3. Procédé selon l'une ou l'autre des revendications 1 et 2 dans lequel ledit tronçon de tube supplémentaire (20) est moins dilatable que le tube d'étanchéité (12, 35).

4. Procédé selon la revendication 3 dans lequel ledit tronçon du tube supplémentaire (20) est en un matériau relativement inextensible par rapport à celui du tube d'étanchéité (12, 35).

5. Procédé selon l'une quelconque des revendications précédentes dans lequel ledit tronçon de tube supplémentaire (20) est un matériau imperméable souple entoilé.

6. Procédé selon l'une ou l'autre des revendications 1 et 2 dans lequel un couvre-tube ou bouclier (27, 37) est prévu pour ledit tronçon de tube supplémentaire, ce couvre-tube épousant la majeure partie du pourtour du tronçon de tube supplémentaire pour l'empêcher de se dilater jusqu'à sortir du canal.

7. Procédé selon l'une quelconque des revendications précédentes dans lequel une pression localisée est appliquée au tube d'étanchéité par des nervures (40, 41, 139) ou analogues en relief sur le couvre-tube ou bouclier (37) en vue de comprimer hermétiquement le tube d'étanchéité contre le canal.

8. Procédé selon l'une quelconque des revendications 1 à 6 dans lequel ledit tronçon de tube supplémentaire (122) présente, en des points espacés sur sa longueur, des éléments en saillie s'étandant suivant la périphérie (126) pour exercer une pression localisée pour comprimer hermétiquement le tube d'étanchéité vers une paroi dudit canal.

9. Procédé selon la revendication 8 dans lequel chaque élément saillant suivant la périphérie (122) est un élément indépendant rapporté autour dudit tronçon de tube supplémentaire.

10. Procédé selon la revendication 9 dans lequel chaque élément saillant (126) est un joint torique en matériau élastique.

11. Procédé selon l'une quelconque des revendications 8 à 10 dans lequel deux éléments saillants sont disposé aux emplacements voulus pour appliquer une compression au tube d'étanchéité juste au-delà des extrémités du tronçon éclaté.

12. Procédé selon l'une quelconque des revendications précédentes dans lequel ledit tronçon de tube supplémentaire, comprend un tube extérieur (123) en matériau relativement inextensible ainsi qu'un tube gonflable intérieur (122) en matériau plus extensible.

13. Procédé selon l'une quelconque des revendications précédentes dans lequel on met un mastic ou une pâte ou une autre matière molle dans le tube d'étanchéité près des bords de l'éclatement.

14. Procédé selon la revendication 13 dans lequel on met le mastic ou autre matière molle dans des régions où une pression est appliquée audit tube d'étanchéité par lesdits éléments saillants s'étendant suivant la périphéric.

15. Procédé suivant l'une quelconque des revendications précédentes dans lequel on place des bandes métalliques flexibles entre les éléments saillants périphériques et la surface dudit tronçon de tube supplémentaire.

16. Récipient comportant une enveloppe en matériau imperméable constituant une bâche (11) réunie de manière étanche à une embase imperméable (32) ou à une feuille de base imperméable (33) au moyen d'un tube d'étanchéité gonflable (12) logé dans un canal rigide (13) caractérisé en ce que, pour procéder à la réparation d'un tronçon du tube gonflable (12) comportant un éclatement (113) ou une fuite, un tronçon de tube gonflable supplémentaire (20, 26, 122) est disposé, fermé aux deux extrémités et adapté à être inserié dans le canal sur toute la région où le tube gonflable (12) est éclaté ou endommagé, ledit tronçon de tube supplémentaire comportant un moyen de valve (21, 125) pour permettre par son gonflage d'assurer la compression du tube d'étanchéité.

17. Récipient selon la revendication 16, caractérisé en ce que ledit tronçon de tube supplémentaire (20) est moins dilatable que le tube d'étanchéité (12).

18. Récipient selon la revendication 16, caractérisé en ce que ledit tronçon de tube supplémentaire (20) est en un matériau relativement inextensible par rapport au matériau constituant le tube d'étanchéité (12).

19. Récipient selon l'une quelconque des revendications 16 à 18, caractérisé en ce que ledit tronçon de tube supplémentaire (20) est en un matériau relativement inextensible par rapport au matériau constituant le tube d'étanchéité (12).

20. Conteneur selon l'une quelconque des revendications 16 à 19 caractérisé en ce qu'un couvre-tube ou bouclier (27) est adapté à s'emboîter dans ledit canal (13) par-dessus ledit court tronçon de tube d'étanchéité (12) de sorte qu'une partie du tronçon de tube supplémentaire (26) est enfermé à l'intérieur de canal (13) et du couvre-tube ou bouclier (27).

21. Conteneur selon la revendication 20, caractérisé en ce que le couvre-tube ou bouclier (27) est en matériau élastique et est façonné (28) élastiquement pour s'engager et être par là retenu à l'intérieur dudit canal.

22. Conteneur selon la revendication 21, caractérisé en ce que le canal présente des lévres ou des rebords dirigés vers l'intérieur ou des parties périphériques (29) sous lesquels s'engagé élastiquement le bouclier ou couvre-tube (27).

23. Conteneur selon l'une quelconque des revendications 20 à 22, caractérisé en ce que le couvre-tube ou bouclier (27) présente un orifice à travers lequel dépasse une valve (21) pour gonfler ledit tronçon de tube supplémentaire (26).

24. Conteneur selon l'une quelconque des revendications 20 à 23, caractérisé en ce que le bouclier ou couvre-tube (37) présente des nervures ou saillies (40, 41, 139) destinées à assurer une compression localisée du tube d'étanchéité (12).

25. Conteneur selon la revendication 16, caractérisé en ce que ledit tronçon de tube gonflable supplémentaire (122) est en matériau élastique fermé aux deux extrémités et contenu dans un tube extérieur (123) en matériau non extensible, le tronçon de tube supplémentaire situé dans le tube extérieur étant inséré dans le canal sur toute la région où le tube d'étanchéité est éclaté ou endommagé, des éléments saillants (126) étant prévus autour de l'ensemble inséré établir des région périphériques de compression hermétique contre le tronçopn de tube gonflable supplémentaire (122).

26. Conteneur selon le revendication 16, caractérisé en ce que ledit tronçon de tube gonflable supplémentaire (122) présente des éléments saillants s'étendant suivant la périphérie (126) situés en des points espacés de sa longueur pour exercer une pression localisée quand ledit tronçon de tube supplémentaire est inséré dans le canal sur toute la région où le tube d'étanchéité cut éclaté ou endommagé.

27. Conteneur selon l'une ou l'autre des revendications 25 et 26, caractérisé en ce que lesdits éléments saillants sont des joints toriques élastiques (126) entourant ledit tronçon de tube gonflable supplémentaire (122).

FIG. 1.

FIG. 2.

FIG. 3.

21

20

4

4

FIG. 4.

21

20

FIG.5.

21

13

20

11

FIG. 6.

21

20

11

12

16

25

15

0 119 748

FIG. 7

FIG. 8.

FIG. 9.

4

FIG. 10.

110

113

111

110

FIG. 11.

111

113

112

FIG. 12.

126

126

126

125

123

126

124

125

122

123

FIG. 13.

FIG. 14.

110

111

130

FIG. 15.

110

111    131    130    131

FIG. 16.

FIG. 17.